# EUROPEAN PATENT APPLICATION

(11) **EP 4 614 065 A1**
(43) Date of publication of application: **10.09.2025**
(21) Application number: 24161343.9
(22) Date of filing: 05.03.2024
(51) Int. Cl.: F23J 15/00, B01D 53/68

(54) **FLUE GAS TREATMENT**

(71) Applicant: HaloSep AB, 400 40 Göteborg (SE)
(72) Inventor: HOLM, Daniel, 400 40 Göteborg (SE)
(74) Representative: Lind Edlund Kenamets Intellectual Property AB

(57) **Abstract**

A flue gas treatment system including a (wet) acid scrubber arranged upstream a dry (or semidry) desulfurization process and corresponding method.

The acid scrubber generates liquid chloride acid which may be used in associated processes, for example pH controlled leaching of flue gas waste (FLG).

## Description

### Field of the invention

The present invention relates to flue gas treatment, and in particular flue gas treatment involving dry and semi-dry flue gas desulfurization.

### Background of the invention

Incineration (combustion) of waste generates heat, which is used for district heating and electricity production, but the process also produces a number of waste byproducts. Flue gases are cleaned from harmful substances in order to minimize pollution when gases are emitted into the air. The harmful substances include heavy metals, nitrogen oxides (NOx) as well as acidic gases such as sulfur dioxide and hydrogen chloride.

There are generally two different ways to remove acidic gases from flue gas, and they are commonly referred to as a "wet" process and a "dry or "semidry" process. These approaches have slightly different characteristics.

In a wet process, the flue gas first passes a particle filter, e.g. an electrostatic precipitator or a fabric filter, to remove fly ash and other particles. The remaining flue gas is then guided through one or several "scrubbers", where it is subject to a spray (or mist) of a scrubbing liquid. Typically, the process includes an acid scrubber followed by an alkaline scrubber. In the acid scrubber the scrubbing liquid is water, which binds hydrogen and chloride to form (liquid) hydrochloric acid which will be discharged from the scrubber. Hydrogen fluoride and other acidic halogenic gases can also be removed in the same way. In the alkaline scrubber, an appropriate alkaline agent is dissolved in water to form the scrubbing liquid. Sulfur oxides (primarily sulfur dioxide) in the flue gas reacts with the agent to form sulfur compounds which will leave the scrubber in a flow of wastewater, possibly in precipitated form. The alkaline scrubbing is also referred to as desulfurization. The alkaline agent used in the alkaline scrubbing is typically one of sodium hydroxide, NaOH (lye or caustic soda), calcium oxide, CaO (quicklime), and calcium carbonate, CaCO₃ (limestone). The wastewater generated in a wet process includes several harmful and toxic substances, and requires further treatment.

In a dry or semidry process, a solid (particulate) alkaline agent is mixed with flue gas in a mixing chamber. The alkaline agent will react with acidic gases such as hydrogen chloride and sulfur dioxide in the flue gas to form other compounds including chloride compounds (such as hydroxy chloride and calcium chloride) and sulfur compounds (such as calcium sulfite and calcium sulfate). These compounds are then separated from the flue gas in some type of particle filter, e.g. a fabric filter. If the alkaline agent is in powder form, the process is referred to as a "dry" process, and if the agent is mixed with water (slurry), the process is referred to as a "semi-dry" process. The alkaline agent used in a dry or semi-dry process is typically one of calcium hydroxide, Ca(OH)₂ (slaked lime) or sodium bicarbonate, NaHCO₃ and sodium carbonate, Na₂CO₃ (soda ash). It is important to note that a dry or semidry process does not generate any wastewater. If additional removal of pollutants in the form of acidic gas or sulfuric compounds is required, an acid (wet) scrubber is sometimes arranged downstream the particle filter. Such an acid scrubber is sometimes referred to as a "polishing scrubber". As it is arranged downstream the filter, the wastewater from such a scrubber will be less polluted.

Another important process in flue gas treatment is pH-controller leaching of flue gas cleaning waste, such as particulate matter from particle filters. These processes require some sort of pH regulator, and hydrochloric acid is particularly advantageous. In plants where a wet desulfurization process is used, hydrochloric acid output from the acid scrubber may advantageously be used in an associated pH-controlled leaching process. This is discussed in EP 3 496 841.

In many situations, a wet process is not ideal, due to the generation of wastewater which needs further treatment. In many jurisdictions, special permits are required in order to operate wet cleaning processes that generate such wastewater. For this and other reasons, a dry or semi-dry process is often preferred. However, when a dry or semi-dry process is used, there is no easily available source of hydrochloric acid. Most chloride is adsorbed in the mixing chamber, and even in situations where a downstream acid scrubber is provided, the output from this process is not sufficiently acidic.

### General disclosure of the invention

It is an object of the present invention to address the above issue, and provide a solution enabling satisfactory extraction of hydrochloride also when a dry or semidry desulfurization process is used.

According to a first aspect of the present invention, this and other objects are achieved by a system for treatment of flue gas from a combustion process, the system comprising a first particle filter arranged to remove particulate materials from the flue gas, an acid scrubber connected to receive flue gas from the particle filter and guide the flue gas through a spray of scrubbing liquid containing water, the acid scrubber having an outlet for hydrochloric acid formed when water reacts with hydrogen chloride in the flue gas, a desulfurization mixing chamber configured to mix flue gas from the acid scrubber with a solid alkaline agent, in order to allow sulfur oxides like sulfur dioxide in the flue gas react with the alkaline agent to form particles of sulfur compounds, a second particle filter arranged to receive flue gas from the desulfurization mixing chamber and to remove particulate matter from the flue gas, and an exhaust for outputting exhaust flue gas from the second particle filter.

In other words, a flue gas treatment system according to the present invention includes a (wet) acid scrubber arranged upstream a dry (or semidry) desulfurization process.

According to a second aspect of the invention, this and other objects are achieved by a method for treatment of flue gas from a combustion process, the method comprising removing particulate materials from the flue gas, scrubbing the filtered flue gas in an acid scrubber by guiding the flue gas through a spray of scrubbing liquid containing water, thereby forming hydrochloric acid when water reacts with hydrogen chloride in the flue gas, desulfurizing the scrubbed flue gas in a desulfurization chamber by mixing the scrubbed flue gas from the acid scrubber with a solid alkaline agent, thereby forming particles of sulfur compounds when sulfur oxides in the flue gas reacts with the alkaline agent, and filtering the desulfurized flue gas to remove particulate matter from the flue gas.

The acid scrubber generates liquid waste including hydrochloric acid which may be used in associated processes, for example pH controlled leaching of flue gas waste (FLG). Although this is a wet process, it does not involve any alkaline agent, and the liquid waste therefore does not require the same type of subsequent processing. Indeed, in many cases the liquid output is immediately useable in the associated process. In other cases, some filtering may be required, e.g. to remove heavy metals.

When hydrochloric acid is a required resource in a facility it is advantageous to have it produced locally (at the same facility ) as hydrochloric acid includes large amounts of water and therefore is heavy and expensive to store and transport. The fact that the hydrochloric acid is used also eliminates the need for alkalic chemicals otherwise required for neutralizing the acid. This reduces cost and also reduces the amount of flue gas waste (FLG) from the treatment process.

A further advantage with having an acid scrubber upstream the desulfurization is that the flue gas waste (FGW) collected by the second particle filter (downstream the desulfurization) will contain lower levels of heavy metals, as some of the heavy metals will be removed by the acid scrubber and the first particle filter.

The alkaline agent (sorbent) is typically one of: a lime compound and a sodium carbonate.

By "lime compound" is intended any calcium-containing inorganic compounds, such as carbonates, oxides, and hydroxides of calcium. Typical examples include calcium oxide ("quicklime", CaO), calcium carbonate ("limestone", CaCO₃), and calcium hydroxide ("slaked lime", Ca(OH)₂). But other compounds with similar chemical properties may also be used, such as magnesium carbonate or magnesium oxide.

By sodium carbonate is intended sodium bicarbonate (NaHCO₃), sodium carbonate ("soda ash", Na₂CO₃) and variations thereof.

When lime (calcium-based) compounds are used as alkaline agents, chloride (or some equivalent agent) is required to catalyze the intended chemical reactions. The chloride will form calcium chloride which will absorb moisture, thereby facilitating efficient capture of SO₂ in the desulfurization mixing chamber. Therefore, it is generally desired that the flue gas entering the desulfurization mixing chamber includes a sufficient amount of hydrogen chloride. The appropriate ratio between hydrogen chloride and sulfur dioxide will depend on the type of desulfurization process, and may be e.g. 0.8.

When an acid scrubber is arranged upstream the desulfurization mixing chamber, much of the hydrogen chloride is removed by the scrubbing process, and the ratio between hydrogen chloride and sulfur dioxide is no longer sufficient for an efficient lime-based desulfurization process. For this reason, the system may include a chloride mixing chamber arranged between the acid scrubber and the desulfurization mixing chamber and configured to mix flue gas from the acid scrubber with a chloride.

The chloride is preferably added by adding a chloride salt, preferably (but not necessarily) calcium chloride. Other substances, forming different deliquescent salts in the mixing chamber, may also be added.

In some embodiments, the alkaline agent is a lime slurry, and the desulfurization mixing chamber is configured to vaporize any moisture introduced by the lime slurry. This type of process is referred to as a semidry process. By ensuring a sufficiently high temperature in the flue gas entering the mixing chamber, a sufficient drying is achieved in the mixing chamber to avoid any "wet" discharge. As an example, the flue gas may have a temperature of at least 170 degrees C, e.g. at least 180 degrees C.

The contact with the scrubbing liquid in the scrubber cools the flue gas, and it may be advantageous to reheat the flue gas in order to achieve a satisfactory efficiency in the desulfurization process. This may be particularly advantageous if the desulfurization process is semidry, i.e. where the flue gas needs to have a temperature sufficient to vaporize water content in the lime slurry introduced into the desulfurization mixing chamber. An increased flue gas temperature is also advantageous in the case mentioned above when chlorides are added. The chlorides are typically added in water-dissolved form, in which case the flue gas should have a temperature sufficient to evaporate the water in the chloride mixing chamber.

For these reasons, in some embodiments a heating arrangement is arranged to reheat flue gas outputted from the acid scrubber.

The heating arrangement may comprise one or more heat exchangers arranged to recuperate heat in the exhaust flue gas and use it to reheat flue gas from the acid scrubber. Exhaust flue gas may be supplied from the exhaust to a heat exchanger configured to transfer heat to the flue gas from the acid scrubber. Alternatively, a first heat exchanger is arranged to transfer heat to a heat carrying medium in a closed circuit, and a second heat exchanger is arranged to transfer heat from the closed circuit to the flue gas from the scrubber. In this case, the first heat exchanger can be located relatively near the exhaust (where the exhaust flue gas is relatively warmer) and the second heat exchanger can be located relatively nearer the acid scrubber. By transferring heat from the first location to the second with a heat carrying medium in a closed circuit - instead of simply moving the warm exhaust flue gas - heat losses can be reduced.

In some embodiments, a further mixing chamber is arranged upstream the first particle filter and is configured to mix the flue gas with a mixing agent.

By mixing the flue gas with an appropriate mixing agent such as active carbon before the gas enters the first particle filter, it is possible to improve the function of the first particle filter such that it is able to more efficiently remove toxic compounds like dioxins and furans, but also to some extent heavy metals. The mixing agent may also contain a "filter precoat" which creates a protective layer in the form of a porous dust cake on the filter medium, thereby preventing particles from clogging the filter medium. Such clogging may cause an undesired pressure drop and reduce filter life.

In some embodiments, the system comprising a recirculation loop, arranged to receive residue from the second particle filter and introduce this residue into the desulfurization mixing chamber. The filter residue contains large amounts of alkaline agent which may still be useful in the desulfurization process, and therefore may be advantageously recirculated. When a recirculation loop is present, the solid alkaline agent may further be added to the recirculation loop and mixed with the filter residue. It may be advantageous to have some type of separation of residue into two fractions, one fraction which is flue gas waste (FLG) and one fraction which is recirculated in the recirculation loop.

A system according to the present invention is particularly useful when combined with a pH controlled leaching system, wherein hydrochloric acid from the acid scrubber can be used as pH regulator in the pH controlled leaching system.

### Brief description of the drawings

The present invention will be described in more detail with reference to the appended drawings, showing currently preferred embodiments of the invention.

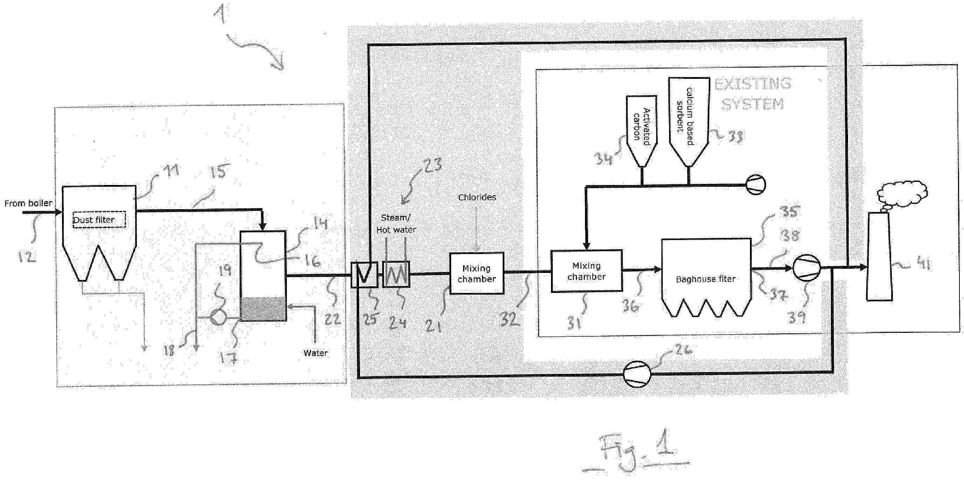

Figures 1-7 show systems for flue gas treatment according to various embodiments of the present invention.

### Detailed description of preferred embodiments

The system 1 in figure 1 includes a first particle filter 11, labelled a "dust filter", arranged to receive flue gas 12 from some type of combustion process, e.g. from an incinerator. The particle filter 11 may be a fabric filter, e.g. a baghouse filter, an electrostatic precipitator, or possibly a cyclone or any other appropriate filter. The purpose of the filter 1 is to remove fly ash and other particulate matter from the flue gas 12. The removed matter (dust) is output from the filter 11 as dry waste 13.

The system 1 further comprises an acid scrubber 14, arranged to receive (filtered) flue gas 15 from the filter 11. The scrubber 14 has a nozzle 16 for creating a spray or mist of fine particles of a scrubbing liquid including water. In most cases, the scrubbing liquid is water, it may include liquid or solid additives to some extent. The scrubber 14 further has an outlet 17 for liquid waste 18. The liquid waste is primarily hydrochloric acid, which is formed when hydrogen chloride in the flue gas 15 reacts with water. In the illustrated example, the scrubber 14 further includes a recirculation pump 19 configured to recirculate some of the waste liquid back to the nozzle 16.

Contact with the scrubbing liquid in the scrubber 14, and evaporation of some of the scrubbing liquid, will significantly lower the temperature of the flue gas. In order to reduce the temperature drop within the scrubber 14, a quench (not shown) may be provided upstream the acid scrubber 14, to lower the temperature of the flue gas 12 before entering the scrubber 14.

The dry waste 13 and the hydrochloric acid 19 may be supplied to associated processes in the same flue gas treatment plant. In particular, the hydrochloric acid 19 may be used as a pH-regulator in various pH controlled processes, such as pH controlled leaching. One example of such a process is disclosed in EP 3 496 841, hereby incorporated by reference.

The system 1 further includes a chloride mixing chamber 21, arranged to receive the (scrubbed) flue gas 22 leaving the scrubber and mix it with chloride 27. The flue gas 22 has a reduced content of chloride, and the addition of chloride 27 in mixing chamber 21 serves to increase the content of chloride which is advantageous for the downstream processing.

Chloride can be introduced into the mixing chamber 21 by solving an appropriate chloride salt, typically calcium chloride 27, into water which is sprayed into the mixing chamber 21. Other deliquescent (moisture absorbing) salts which may be used are magnesium chloride, zinc chloride, ferric chloride, carnallite, potassium carbonate, potassium phosphate, ferric ammonium citrate, ammonium nitrate, potassium hydroxide, and sodium hydroxide.

Before entering the chloride mixing chamber 21, the flue gas 22 is heated by a heating arrangement 23, here including a heat exchanger 24 configured to transfer heat from a source of steam/hot water to the flue gas 22. In the illustrated example, the heating arrangement 23 further includes a feedback of exhaust flue gas 38 to a further heat exchanger 25, which transfers heat from the exhaust gas 37 to the flue gas 22.

The system 1 further comprises a desulfurization mixing chamber 31, arranged to receive chloride enhanced flue gas 32 from the chloride mixing chamber. In the mixing chamber 31, the flue gas 32 is mixed with a solid alkaline agent (sorbent) which causes chemical reactions with acidic gases in the flue gas, including sulfur oxides, primarily sulfur dioxide, and (any remaining) hydrogen chloride. In the illustrated example, the alkaline agent is a calcium based sorbent, typically calcium hydroxide ("slaked lime", Ca(OH)₂) obtained from calcium oxide ("quicklime", CaO), or calcium carbonate ("limestone", CaCO₃).

In the mixing chamber 31, sulfur oxides (primarily sulfur dioxide) in the flue gas react with the alkaline agent to form particles of sulfur compounds, such as calcium sulfite (CaSOs) and calcium sulfate (CaSO₄).

For a calcium-based process as shown in figure 1, the required temperature of the flue gas entering the mixing chamber 31 is preferably in the range 130 - 160 degrees C. A higher temperature is disadvantageous for the sorption of sulfur and chloride. With lower temperatures, there is a risk that the residue (flue gas waste, FLG) will contain too much water making it more difficult to handle.

The system 1 further comprises a second particle filter 35, arranged to receive desulfurized flue gas 36 from the mixing chamber 31. Similar to the first particle filter 11, the second particle filter serves to remove particulate matter from the flue gas 36. The second particle filter 35 may be a fabric filter, e.g. a baghouse filter, an electrostatic precipitator, or any other appropriate filter.

In the illustrated example, active carbon 34 is also introduced into the mixing chamber 31. The active carbon will serve to improve the performance of the downstream particle filter 35, in particular to enable removal of mercury, dioxins and furans. The second filter 35 has an exhaust 37 from which exhaust flue gas 38 is emitted. Dry residue, e.g. dust, sulfur compounds, ash, often referred to as flue gas waste (FGW) or Air Pollution Control residues (APC-r), is discharged from the particle filter 35 and may be used for commercial processes such as gypsum production.

The flow of flue gas through the system 1 is promoted by one or several fans 39. In a situation where the fan forms part of an existing process, originally including only the desulfurization mixing chamber 31 and the second particle filter 35, it is possible that the power of the fan(s) 41 will need to be increased due to the increased pressure drop caused by the first filter 11, the acid scrubber 14 and the exchanger(s).

The exhaust flue gas 38 may be supplied to a further treatment system 41, typically including catalytic treatment for removal of nitrogen oxides (NOx). When the treatment/cleaning process is complete, the cleaned flue gas may finally be emitted into the atmosphere.

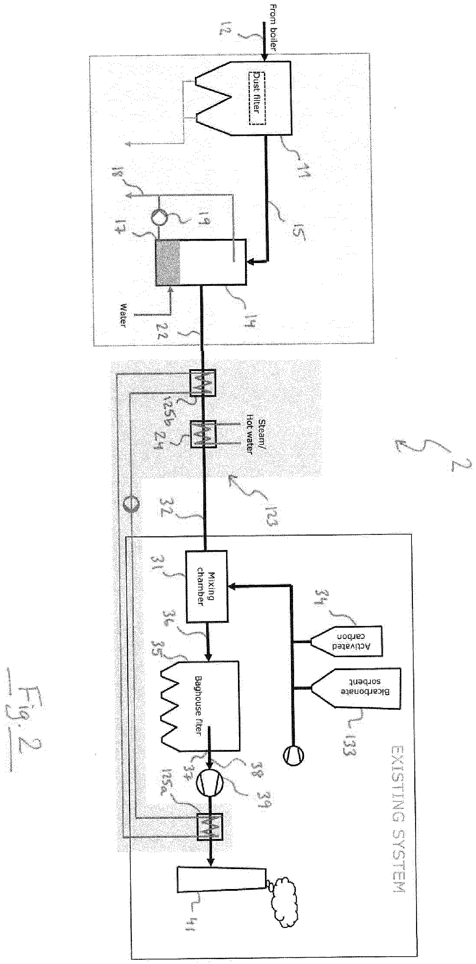

Turning to the system 2 in figure 2, this system is similar to the system 1.

The main difference between system 2 and system 1 is that in system 2 the alkaline agent (sorbent) is a bicarbonate based sorbent 133. Typically, the sorbent includes at least some amount of sodium bicarbonate (NaHCO₃) or sodium carbonate ("soda ash", Na₂CO₃). The chemical reactions in the mixing chamber 31 will therefore be slightly different, and result in formation of sodium sulfite (Na₂SO₃) and sodium sulfate (Na₂SO₄).

As a consequence of using bicarbonate as sorbent (instead of a calcium based sorbent), there is in this case no need to add chloride, and hence the system 2 does not include any chloride mixing chamber.

For a bicarbonate-based process as shown in figure 2, the required temperature of the flue gas entering the mixing chamber 31 is preferably at least 190 degrees C.

Compared to the system 1 in figure 1, the heating arrangement 123 in figure 2 includes two heat exchangers 125a, 125b to recuperate heat from the exhaust gas 38. The first heat exchanger 125a is located close to the exhaust 37, i.e. before the exhaust has lost any significant amount of heat. The second heat exchange 125b is located where the reheating of hydrogen chloride reduced flue gas 22 takes place. The first heat exchanger 125a transfers heat from the exhaust flue gas to a heat carrying medium such as water, carried in a closed circuit 126. The second heat exchanger 125b transfers heat from the heat carrying medium to the flue gas 22. A pump 127 is arranged to ensure a flow of heat carrying medium in the closed circuit 126.

In most other aspects, the system 2 is identical or equivalent to the system 1. Components having identical numbers as components in figure 1 can be considered as corresponding to those discussed in relation to figure 1.

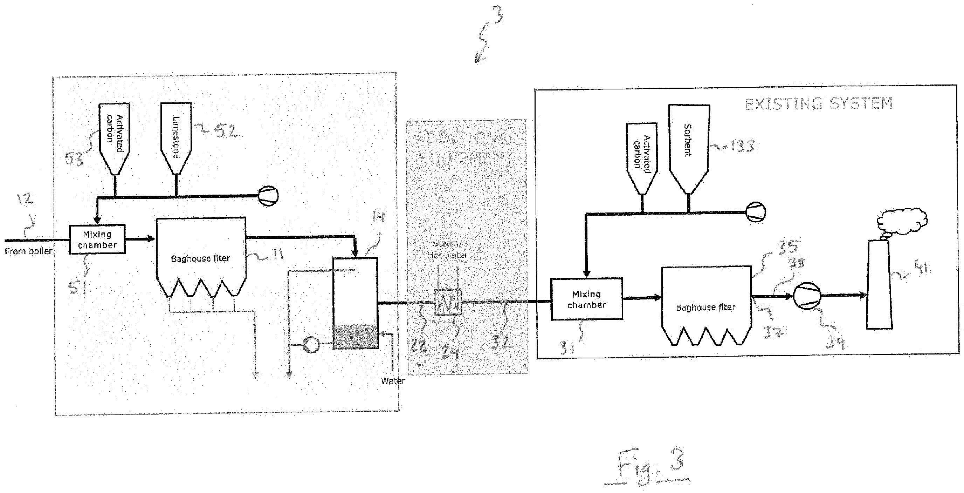

Turing to the system 3 in figure 3, this system is similar to the system 2 in figure 2, but without the recuperation of heat from the exhaust flue gas. Components having identical numbers as components in figure 1 can be considered as corresponding to those discussed in relation to figure 1.

The only other difference is that in system 3, another mixing chamber 51 is provided upstream the first particle filter 11, and arranged to receive the flow of flue gas 12 before it enters the particle filter 11. A suitable dry mixing agent, in the illustrated case a mix of limestone 52 and active carbon 53, is introduced into the mixing chamber 51.

The mixing agent is selected to improve the performance of the filter 11, thereby lowering the concentrations of heavy metals and dioxins before the flue gas enters the acid scrubber 14. As a consequence, the residue from the second particle filter 35 will contain much less of such harmful substances, thereby increasing the potential use of such residue for commercial use, e.g. in gypsum production.

The active carbon 53 serves to adsorb mercury to firm particles which may be removed by the filter 11. Active carbon also binds dioxins and furans. The limestone 52 serves to promote a build-up of a porous dust cake on the filter medium (e.g. the fabric of a baghouse filter). The cake prevents particles from entering the filter medium and causing plugging of the filter and associated pressure drop. The limestone 52 or equivalent substance is sometimes referred to as a filter "precoat".

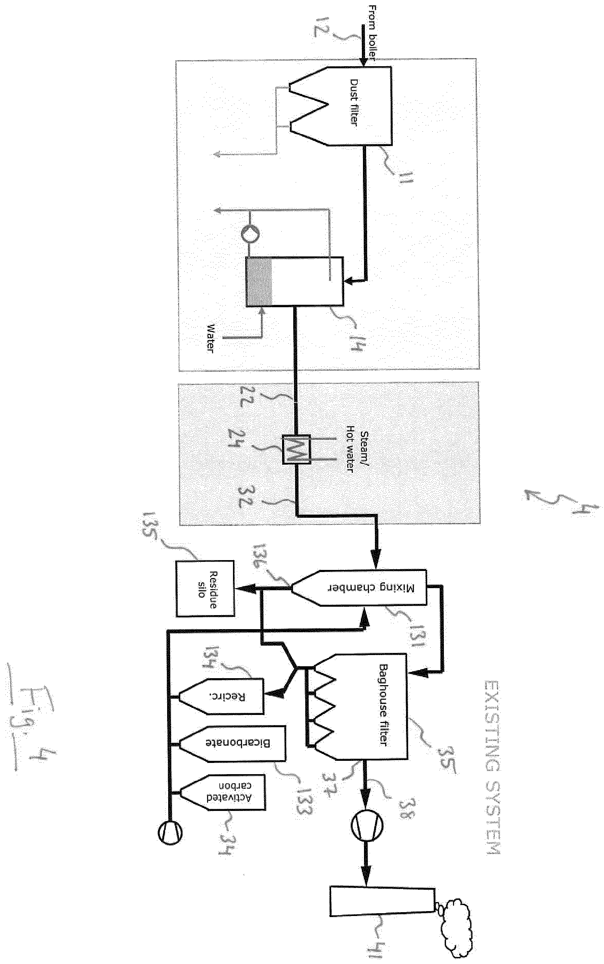

The system 4 in figure 4 is slightly different from the systems 1-3 in that it involves recirculation of residue from the second particle filter 35.

The system 4 in figure 4 uses bicarbonate 133 as alkaline agent (sorbent), and may be referred to as a "dry bicarbonate system". Components having identical numbers as components in figure 1 can be considered as corresponding to those discussed in relation to figure 1.

Here, a recirculation loop 132 is arranged to recirculate residue 134 from the particle filter 35. Typically, most of the residue (dust, ash) collected from the filter 35 can be recirculated, while a smaller portion (e.g. 10%), which is not suitable for recirculation (e.g. due to contamination or harmful content), is directed directly to a residue silo 135.

The recirculated residue 134 is mixed with the sorbent, in this case bicarbonate 133, and active carbon 34, and the mix is introduced into the mixing chamber 131.

In figure 4, the mixing chamber 131 is illustrated to have a discharge outlet 136, through which dry residue from the mixing chamber is discharged into the residue silo 135.

As mentioned above, for a bicarbonate-based process the flue gas temperature is preferably at least 190 degrees C. With lower temperatures, the efficiency of the desulfurization process is not satisfactory, and recirculation as shown in figure 4 may serve to increase efficiency. With recirculation, a satisfactory efficiency may be achieved with flue gas temperatures as low as 150 degrees C or even around 130 degrees C. This may reduce or completely eliminate the need for any heating arrangement 23, 24.

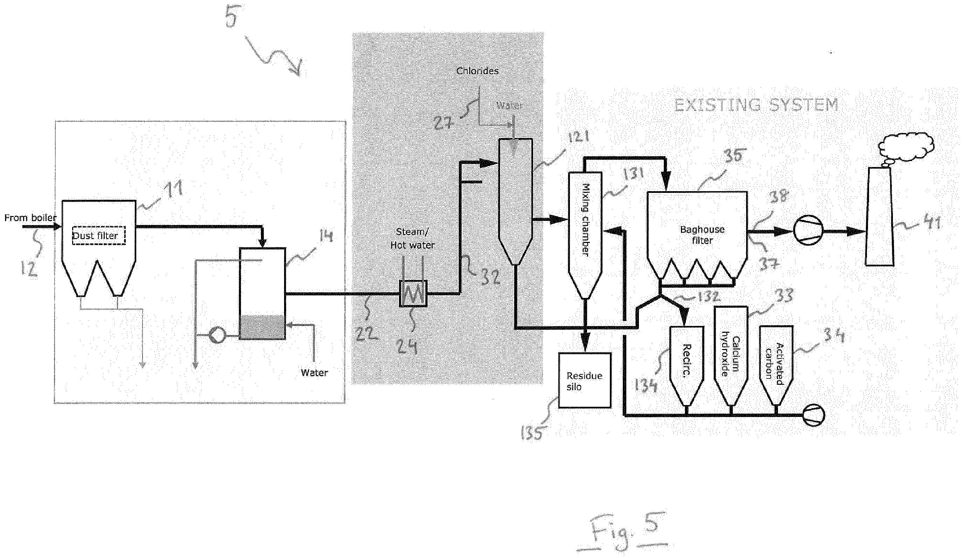

The system 5 in figure 5 is similar to the system 4 in figure 4, but uses a calcium-based (e.g. lime) as alkaline agent (sorbent) 33. The system 5 in figure 5 may be referred to as a "dry calcium based system".

With a calcium (lime) based sorbent, as discussed above, chloride is preferably added to the flue gas before it enters into the desulfurization mixing chamber 131. For this purpose, the system 5 in figure 5 comprises a chloride mixing chamber 121, also referred to as an "evaporator" or "condensing tower".

Chloride is introduced into the mixing chamber 121 by solving an appropriate chloride salt, typically calcium chloride 122, into water which is sprayed into the mixing chamber 121. The heated flue gas 31 is introduced into the mixing chamber 121 and passes though the spray or mist of chlorinated water. The heat of the flue gas 32 is sufficient to dry (evaporate) the water, such that any residue discharged from the mixing chamber will be dry. The dry residue can be directed to the same residue silo 135 as discharge form the second particle filter 35.

As mentioned above, for a calcium (lime) based process the flue gas temperature is preferably in the range 130 - 160 degrees C. If the temperature is in the lower range, or even lower than 130 degrees, the process may not provide satisfactory efficiency. In such a situation, recirculation as shown in figure 5 may serve to increase efficiency. This may reduce or completely eliminate the need for any heating arrangement 23, 24.

It is noted that an evaporator or condensing tower 121 in some situations forms part of an existing desulfurization process, in order to control temperature and humidity. Such a system is sometimes referred to as a conditioned lime system. Such an existing evaporator may advantageously be used by the system 5 in figure 5, by simply adding chloride to the water that is introduced into the evaporator 121.

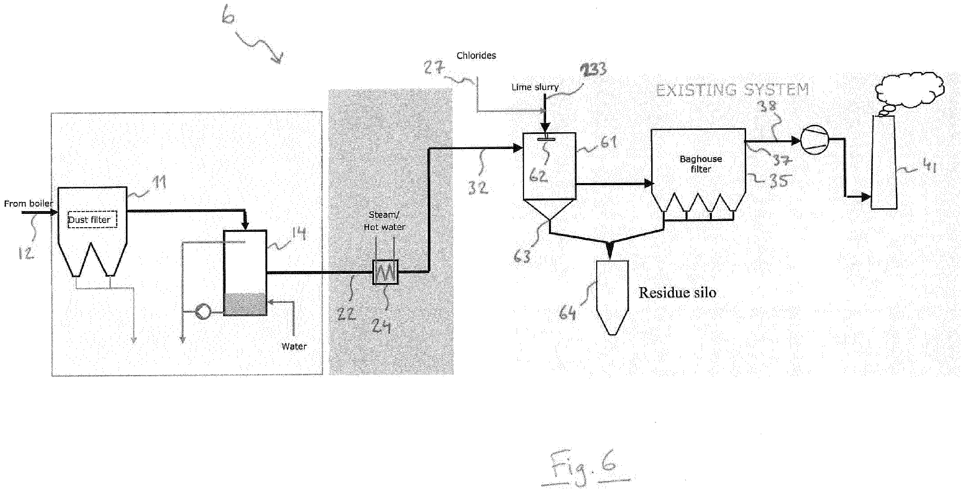

Turning to figure 6, the system 6 is a semi-dry (calcium based) system, where the alkaline agent (sorbent) is a lime slurry 233, i.e. quicklime mixed with a sufficient amount of water to form a suspension of calcium hydroxide particles in water.

The desulfurization mixing chamber, which is here referred to as a spray dryer 61, is arrange to receive the reheated flue gas 32. The spray dryer 61 includes a spray nozzle 62, configured to sprayed (or otherwise finely disperse) the lime slurry 233 into contact with the flue gas.

The acid gases, in particular sulfur dioxide, will react with the lime to form solid particles of sulfur compounds, most of which will follow the flue gas downstream to the second particle filter 35.

The heat of the flue gas will serve to remove (vaporize) the water and moisture introduced by the slurry, and a dry residue will be discharged through an outlet 63 (possibly together with some particles generate in the desulfurization process) into a residue silo 64.

In the illustrated case, the residue silo 64 is used also for residue from the second particle filter 35.

As the slurry contains water, additional chloride 27 (which was added in a separate mixing chamber in figures 1 and 5), may now be added directly to the lime slurry 233 and thereby be introduced into the mixing chamber 61. As mentioned above, the additional chloride is required because most of the chloride in the flue gas has been removed in the acid scrubber 11, and chloride is a useful component in the desulfurization process.

For a semi-dry process, the flue gas temperature is preferably at least 170 degrees C, in order to achieve sufficient evaporation of water in the spray dryer 61.

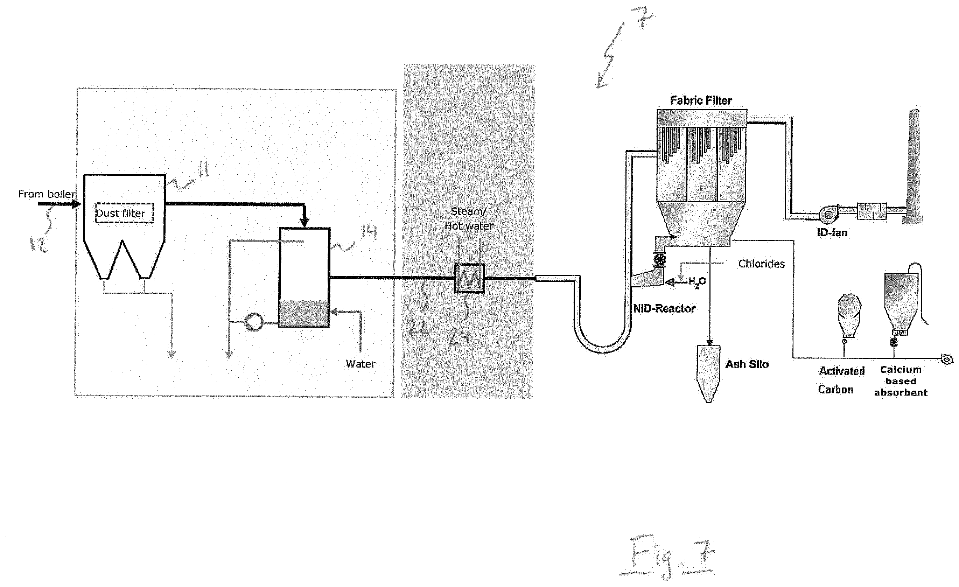

The system 7 in figure 7 is a "flash dry system", where the desulfurization process is a so called "novel integrated desulfurization" (NID) process. In such a system, chlorides may be injected in a similar manner as discussed with reference to figure 5.

The person skilled in the art realizes that the present invention by no means is limited to the preferred embodiments described above. On the contrary, many modifications and variations are possible within the scope of the appended claims. For example, the treatment process may involve additional steps not indicated in the presently discussed embodiments. Such additional steps may occur both upstream and downstream the acid scrubber 14. Further, the alkaline agents discussed herein are only examples, and several other compounds may be used, including dolomite, trona, ammonia, magnesium oxide, zeolites, titanium dioxide, etc. and mixing agents discussed.

## Claims

1. A system (1, 2, 3, 4, 5, 6, 7) for treatment of flue gas (12) from a combustion process, the system comprising:
a first particle filter (11) arranged to remove particulate materials from the flue gas;
an acid scrubber (14) connected to receive filtered flue gas (15) from the particle filter (11) and guide the filtered flue gas through a spray of scrubbing liquid containing water, the acid scrubber having an outlet for hydrochloric acid formed when water reacts with hydrogen chloride in the flue gas;
a desulfurization mixing chamber (31; 131; 61) configured to mix scrubbed flue gas (32) from the acid scrubber (14) with a solid alkaline agent (33; 133; 233), in order to allow sulfur oxides in the flue gas react with the alkaline agent to form particles of sulfur compounds;
a second particle filter (35) arranged to receive desulfurized flue gas (36) from the desulfurization mixing chamber (31; 131; 61) and to remove particulate matter from the desulfurized flue gas; and
an exhaust (37) for outputting exhaust flue gas from the second particle filter.

2. The system according to claim 1, wherein the alkaline agent is one of: a lime compound (33; 233) and a sodium carbonate (133).

3. The system according to claim 2, wherein the alkaline agent (33) is a lime compound, and wherein the system further comprises a chloride mixing chamber (21; 121) arranged between the acid scrubber (14) and the desulfurization mixing chamber (31) and configured to mix flue gas (32) from the acid scrubber (14) with a chloride (27).

4. The system according to claim 2, wherein the alkaline agent is a lime slurry (233), and wherein the desulfurization mixing chamber (61) is configured to vaporize any moisture introduced by the lime slurry.

5. The system according to claim 4, wherein the desulfurization mixing chamber (61) is also configured to mix the flue gas (32) with a chloride (27).

6. The system according to any one of the preceding claims, further comprising a heating arrangement (23) arranged to heat flue gas (22) outputted from the acid scrubber (14).

7. The system according to claim 6,
wherein the heating arrangement comprises a heat exchanger (25) arranged to transfer heat from the exhaust flue gas (38) to the flue gas (22), and/or
wherein the heating arrangement comprises a first heat exchanger (125a) arranged to transfer heat from the exhaust flue gas (38) to a heat carrier medium in a closed circuit (126), and a second heat exchanger (125b) arranged to transfer heat from the heat carrying medium to the flue gas (22).

8. The system according to any one of the preceding claims, further comprising a further mixing chamber (51) arranged upstream the first particle filter and configured to mix the flue gas with a mixing agent (52, 53).

9. The system according to claim 8, wherein the mixing agent includes active carbon and optionally a filter precoat.

10. The system according to any one of the preceding claims, further comprising a recirculation loop (132), arranged to receive residue (134) from the second particle filter (35) and introduce said residue (134) to the desulfurization mixing chamber (131).

11. The system according to claim 11, wherein the solid alkaline agent (33; 133) is added to the recirculation loop (132) and mixed with the residue (134) from the second particle filter (35).

12. The system according to any one of the preceding claims, wherein the first particle filter (11) is one of a fabric filter and an electrostatic precipitator, and/or the second particle filter (35) is one of a fabric filter and an electrostatic precipitator.

13. The system according to any one of the preceding claims, wherein the desulfurization mixing chamber (31; 131; 61) is further configured to mix the flue gas (32) with active carbon (34).

14. A system for flue gas treatment, comprising a system according to one of claims 1-13 and a pH controlled leaching system, wherein hydrochloric acid from the acid scrubber is used as pH-regulator in the pH controlled leaching system.

15. A method for treatment of flue gas (12) from a combustion process, the method comprising:
removing particulate materials from the flue gas (12);
scrubbing the filtered flue gas (15) in an acid scrubber (14) by guiding the flue gas through a spray of scrubbing liquid containing water, thereby forming hydrochloric acid when water reacts with hydrogen chloride in the flue gas;
desulfurizing the scrubbed flue gas (32) in a desulfurization chamber (31; 131; 61) by mixing the scrubbed flue gas (32) from the acid scrubber (14) with a solid alkaline agent (33; 133; 233), thereby forming particles of sulfur compounds when sulfur oxides in the flue gas reacts with the alkaline agent; and
filtering the desulfurized flue gas (35) to remove particulate matter from the flue gas.
